# EUROPÄISCHE PATENTSCHRIFT

(11) **EP 0 917 382 B1**
(45) Veröffentlichungstag und Bekanntmachung des Hinweises auf die Patenterteilung: **04.04.2007**
(21) Anmeldenummer: 98250314.6
(22) Anmeldetag: 07.09.1998
(51) Int. Cl.: H04Q 7/36, H04Q 7/34

(54) **Verfahren zur Zuweisung von optimalen Betriebsparametern, insbesondere Betriebsfrequenzen**
Method for allocating optimal operating parameters, especially operating frequencies
Méthode pour allouer des paramètres opératoires optimaux en particulier fréquences opératoires

(30) Priorität: 22.10.1997 DE 19747834
(43) Veröffentlichungstag der Anmeldung: 19.05.1999
(60) Teilanmeldung: 05090205.5
(73) Patentinhaber: Vodafone Holding GmbH, 40213 Düsseldorf (DE)
(72) Erfinder: Leinenbach, Karin, Dipl.-Ing., 40489 Düsseldorf (DE); Graf, Florian, Dr.-Ing., 40235 Düsseldorf (DE); Krüger, Jörg, Dipl.-Phys., 41462 Neuss (DE); Ruse, Holger, Dr.-Ing., 40670 Meerbusch-Osterrath (DE)
(74) Vertreter: Henze, Lothar

(56) Entgegenhaltungen:
- WO-A-93/15591
- US-A- 5 410 737
- US-A- 5 442 804
- US-A- 5 475 868
- US-A- 5 561 839

## Beschreibung

Die Erfindung betrifft ein Verfahren zur Zuweisung von optimalen Betriebsfrequenzen.

In einem Funknetz, insbesondere Mobilfunknetz, kann zwischen Signalen gleicher oder nahe beieinanderliegender Frequenz von unterschiedlichen Funkzellen zugeordneten Sendern eine Störung auftreten. Da Sender verschiedener Funkzellen des Mobilfunknetzes unterschiedliche Signale, beispielsweise Gespräche oder Daten, auf einer jeweils bestimmten Frequenz übertragen, wird hierdurch der Empfang der Signale durch Funknetzteilnehmer mehr oder weniger gestört. In welchen Funkzellen in der Umgebung eines Senders dieser Sender die von dortigen Sendern ausgesendeten Signale stört und wie stark die Störung ist, hängt von der Feldausbreitung der Signale und damit u.a. von der Entfernung der anderen Funkzellen von diesem Sender sowie von räumlichen Gegebenheiten, wie Gebäuden, Bergen, Tälern etc. ab. Wenn das Signal eines Senders einer Funkzelle in einer anderen Funkzelle verglichen mit einem in der anderen Funkzelle gesendeten Signal zu stark ist, also zu starke Störung auftritt, kann für diese beiden Funkzellen nicht die gleiche Frequenz bzw. können nicht die gleichen Frequenzen verwendet werden. Die Optimierung der Frequenzvergaben für Funkzellen des Mobilfunk-Sendegebietes verringert Störungen durch einer Funkzelle jeweils benachbarte Funkzellen. Der Aufwand bei der Berechnung von Störungen der Signale von Sendern durch Signale von Sendern in anderen Funkzellen hängt von der Rasterung der Funkzellen, also davon ab, wieviele Einzelpunkte oder Rasterzellen in einer Funkzelle jeweils betrachtet werden. Ferner hängt die Qualität der Optimierung davon ab, bis in welche Entfernung vom Sender einer Funkzelle die von diesem Sender gesendeten Signale noch zur Berechnung von Störungen berücksichtigt werden. Jedoch kann aufgrund begrenzter Rechnerleistung das Funknetz-Sendegebiet nicht in beliebig kleine jeweils einzeln zu betrachtende Punkte unterteilt werden. Deshalb sind bisher keine zur rechnerischen Frequenzvergabeoptimierung im gesamten Sendegebiet geeigneten effizienten Verfahren bekannt.

Hiervon ausgehend ist die Aufgabe der Erfindung die Schaffung eines optimierteren Verfahrens zur Zuweisung von Funkfrequenzen zu den Sendern von Funkzellen eines Funknetzes, insbesondere Mobilfunknetzes, welches möglichst einfach und effektiv eine Zuweisung von Funkfrequenzen zu den Sendern von Funkzellen mit möglichst geringen Störungen von Signalen von Sendern durch Signale von anderen Sendern erlaubt.

Diese Aufgabe wird durch ein Verfahren gemäß dem unabhängigen Verfahrensanspruch 1 gelöst.

Das erfindungsgemäße Verfahren zur Zuweisung von Funkfrequenzen zu den Sendern von Funkzellen eines Funknetzes erlaubt eine einfache und im Ergebnis qualitativ hochwertige Funkfrequenzzuweisung für das gesamte Sendegebiet eines Funknetzes. Es ist insbesondere für ein Mobilfunknetz geeignet. Jedoch kann das Verfahren auch für andere Funknetze verwendet werden, insbesondere für die Funkübertragung zu stationären Endgeräten von Teilnehmern, welche insbesondere in Ballungszentren ohne Verwendung von Festnetzleitungen eine flächendeckende Versorgung der stationären Endgeräte von Teilnehmern ermöglicht.

Die rechnergestützte Analyse des gesamten räumlichen Gebiets des Funknetzes wird insbesondere durch die unterschiedliche Rasterung von Funkzellen ermöglicht. Dabei werden im folgenden als Normalzellen bezeichnete Funkzellen in einem ersten Raster, welches als Großraster bezeichnet wird, in Rasterzellen unterteilt, während andere Funkzellen, welche im weiteren als Mikrozellen bezeichnet werden, in einem weiteren Raster, nämlich dem Kleinraster, in Rasterzellen unterteilt werden, wobei die Rasterzellen des Kleinrasters kleiner als die Rasterzellen des Großrasters sind. Damit kann für unterschiedliche räumliche Gegebenheiten in Funkzellen eine unterschiedliche Auflösung eingeführt werden, welche den unterschiedlichen Feldstärkeverlauf von Signalen um einen Sender berücksichtigt. Insbesondere im Stadtbereich kann z.B. durch hohe Gebäude die Feldstärke von Signalen eines Senders mit zunehmender räumlicher Distanz zum Sender schneller abnehmer als auf einem flachen Feld. Ferner kann hierbei berücksichtigt werden, daß im Stadtbereich in einem bestimmten räumlichen Bereich mehr Teilnehmer sind, so daß zur Vermeidung von Interferenzen auch mehr Funkzellen pro räumlichem Bereich, also kleinere Funkzellen oder Mikrozellen, verwendet werden. Hierbei steht in jeder Funkzelle, also Normalzelle oder Mikrozelle z.B. jeweils ein Sender. Als Sender wird dabei ein üblicherweise stationärer Sender des Funknetzes betrachtet; die Sender der Endgeräte von Funknetz-Teilnehmern, also Mobilfunktelefone (= Handys), können bei einem erfindungsgemäßen Verfahren eventuell vernachlässigt werden. Ein Gleichfrequenzausschluß kann binär quantisiert sein, so daß er entweder vorliegt oder nicht vorliegt. Er kann jedoch auch in mehr als zwei Stufen angegeben sein und damit das Ausmaß der Störung eines Signals in einer Funkzelle durch Signale von Sendern aus der gleichen Funkzelle und insbesondere aus anderen Funkzellen z.B. als "sehr stark", "stark", "schwach", "sehr schwach" etc. angeben. Dann können bei der Frequenzvergabe z.B. zuerst dringende Gleichfrequenzanschlüsse aufgrund "sehr starker" Störung etc. und dann in Stufen die weniger dringenden berücksichtigt werden.

Die erfindungsgemäße Zuweisung von Funkfrequenzen zu den Sendern von Funkzellen erfolgt aufgrund der Berücksichtigung möglichst vieler Gleichfrequenzausschlüsse, also unbedingter oder bedingter Verbote der Benutzung der gleichen Frequenz oder Frequenzen in zwei Funkzellen, deren Sender den Signalempfang in der jeweils anderen Funkzelle in unerwünschtem Ausmaße stören. Dabei soll jede Frequenz im Funknetz möglichst oft benutzt werden. Die Unterteilung in Rasterzellen, also in Teilgebiete von Mikrozellen oder von Normalzellen ermöglicht die vorteilhafte Berücksichtigung von mit größerer Auflösung als die Größe der Funkzellen vorliegenden Daten zur Berechnung des Feldstärkeverlaufs. Durch die Verwendung von Rasterzellen können die Feldstärken der von einem Sender außerhalb einer betrachteten Funkzelle störend einwirkenden Signale an unterschiedlichen Punkten einer Funkzelle, nämlich in den Rasterzellen, betrachtet werden, was eine deutliche Optimierung bei der Zuweisung von Funkfrequenzen ergibt, weil die Feldstärken in unterschiedlichen Rasterzellen einer Funkzelle sehr verschieden sein können; so kann in einer Funkzelle z.B. in, neben oder hinter darinliegenden Gebäuden die Feldstärke von störenden Signalen im Vergleich zu Nutzsignalen von Sendern aus der betrachteten Funkzelle völlig unterschiedllich sein, so daß eine Einzelbetrachtung in den Rasterzellen und Entscheidung aufgrund der Rasterzellen-Vergleiche nach geeigneten Entscheidungskriterien die Funkfrequenzzuweisung optimieren.

Insbesondere können in einem an ein Teilgebiet des Funknetzes mit Mikrozellen angrenzenden Übergangsgebiet mit Normalzellen Rasterzellen durch Unterteilung von einigen dieser Normalzellen in einem Zwischenraster oder im Kleinraster gebildet werden. Damit können in diesem Gebiet mit höherer Genauigkeit die Signale aus Mikrozellen berücksichtigt werden.

Ferner werden zweckmäßig in Rasterzellen von Funkzellen, also von Mikrozellen oder von Normalzellen, nur Störungen von Sendern betrachtet, die sich in einem bestimmten, die betrachtete Funkzelle umgebenden Gebiet befinden. Dies ist ein bei rechnergestützer Bearbeitung relativ einfach zu berücksichtigendes Kriterium. Insbesondere können dabei Funkzellen innerhalb eines bestimmen Radius' um eine betrachtete Funkzelle berücksichtigt werden. Dabei ist zweckmäßig der Radius um eine gerade betrachtete Funkzelle, innerhalb welchem Sender hinsichtlich ihrer Störeinwirkung betrachtet werden, in einer Stadt kleiner, vorzugsweise um mehr als den Faktor 10 kleiner, als der in einem Landgebiet betrachtete Radius, womit die unterschiedlichen Wellenausbreitungen in Stadtgebieten und in ländlichen Gebieten berücksichtigt werden können.

So ist der Rasterzellendurchmesser in der Stadt vorzugsweise ca. 5 bis 10 m und auf dem Land ca. 200 m. Die sehr unterschiedliche Rasterzellengröße erlaubt eine sehr hoch aufgelöste Betrachtung in der Stadt, wo dies erforderlich ist, wobei auf dem Land eine niedrig aufgelöste Rasterzellenbetrachtung möglich ist, um den Rechenaufwand gering zu halten ist.

Hinsichtlich der Entscheidung, ob zwischen zwei Funkzellen ein Gleichfrequenzausschluß definiert wird, ist insbesondere der Anteil der Rasterzellen einer Funkzelle, in welchen das Nutzsignal-/Störsignal-Verhältnis zu klein ist, von Bedeutung. Insbesondere ist eine Entscheidung für einen unbedingten Gleichfrequenzausschluß zwischen einer Zelle und einer anderen Zelle zu treffen, wenn 0,01 bis 10 %, insbesondere 5 % der Rasterzellen einer Funkzelle durch einen Sender einer anderen Funkzelle derart gestört werden, daß das Nutzsignal-/Störsignal-Verhältnis unter einem vorgebbaren Schwellwert liegt.

Die berücksichtigte "Feldstärke" kann die elektromagnetische Feldstärke oder die Leistung oder die Intensität oder ein anderer, das Ausmaß der Störung durch ein Feld repräsentierender gemessener oder berechneter Parameter sein.

Der Feldstärkeverhältnis-Entscheidungsschwellwert, jenseits welchem ein Gleichfrequenzausschluß zwischen zwei Zellen definiert wird, beträgt vorzugsweise 1 bis 20 dB, insbesondere 9 dB.

Die Verwendung einer Datei mit Informationen über Gleichfrequenzausschlüsse, welche nach einem erfindungsgemäßen Verfahren erzeugt wird, optimiert den Betrieb eines Funknetzes, insbesondere Mobilfunknetzes. Dabei werden Sendern des Mobilfunknetzes in zwei Funkzellen nur dann gleiche Frequenzen zugewiesen, wenn kein Gleichfrequenzausschluß zwischen diesen beiden Funkzellen vorliegt. Die erfindungsgemäße Frequenzzuweisung optimiert dabei Übertragungen im Mobilfunknetz durch möglichst geringe Störeinwirkung von anderen Sendern des Mobilfunknetzes auf gleicher und eventuell auch benachbarter Frequenz. Hierdurch wird auch die erforderliche Anzahl von Betriebsfrequenzen verringert.

Weitere Merkmale und Vorteile der Erfindung ergeben sich aus den weiteren Unteransprüchen und der Beschreibung eines Ausführungsbeispiels anhand der Zeichnung. Dabei zeigt:

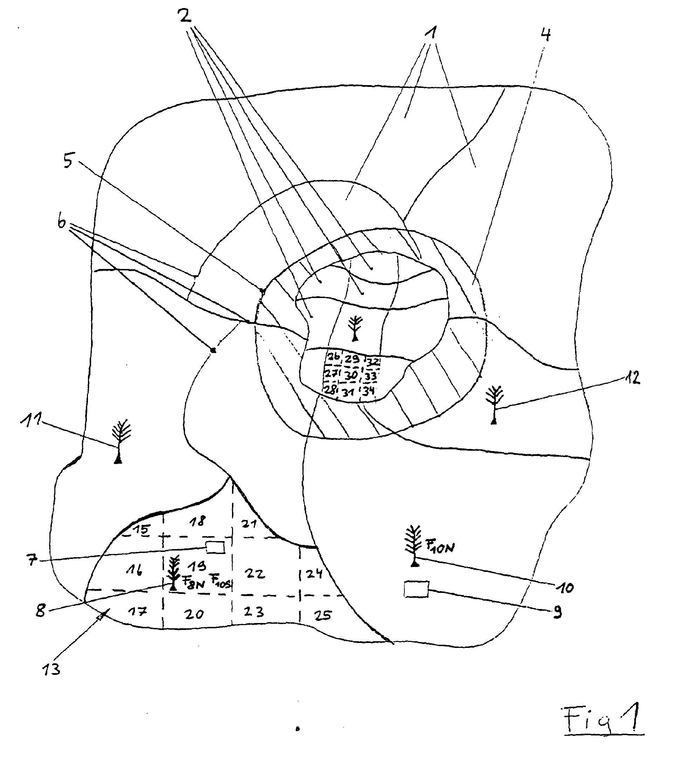

- Fig. 1: schematisch einen räumlichen Ausschnitt eines Funknetzes.

In Figur 1 ist schematisch ein räumlicher Ausschnitt eines Mobilfunknetzes dargestellt. Dabei sind im äußeren Bereich des Mobilfunknetzes Normalzellen 1 und im inneren Bereich Mikrozellen 2 dargestellt. Im vorliegenden Beispiel sind die Mikrozellen 2 kleiner als die Normalzellen 1. Der Bereich, in welchem Normalzellen 1 dargestellt sind, kann beispielsweise ein ländlicher Bereich sein; der Bereich mit Mikrozellen 2 kann beispielsweise eine Stadt sein. Innerhalb einer Funkzelle, also einer Normalzelle 1 oder Mikrozelle 2, ist üblicherweise ein Sender, also eine Sende- und Empfangsstation des Funknetzes angeordnet.

Überdies ist in Figur 1 ein an das Teilgebiet des Funknetzes mit Mikrozellen 2 angrenzendes Übergangsgebiet 4 schraffiert dargestellt. Das Übergangsgebiet 4 umgibt hier das Mikrozellengebiet. Dabei ist die äußere Grenze 5 des Übergangsgebiets 4 hier nicht identisch mit Grenzen 6 von Normalzellen 1. Ein Anwender des Funknetzes, also beispielsweise ein Mobilfunkteilnehmer 7, innerhalb einer Funkzelle, wie einer Normalzelle 1, hier in der Normalzelle 13, sendet Signale zu einer Basisstation mit einem Sender 8 in diese Zelle 13 und empfängt Signale von diesem Sender 8. Innerhalb einer anderen Funkzelle sendet ein weiterer beispielhaft dargestellter Mobilfunkteilnehmer 9 Signale an mindestens einen Sender 10 in dieser anderen Funkzelle, welche im dargestellten Beispiel ebenfalls eine Normalzelle 1 ist. Dabei breiten sich Signale, welche von einem Mobilfunkteilnehmer 9 oder insbesondere von einem Sender 10 in einer Funkzelle mit der Feldstärke F_{10N} abgesendet werden, in benachbarte andere Normalzellen 1, 13 und/oder Mikrozellen 2 aus. Somit erreicht ein Signal des Senders 10 auch den Empfänger des Mobilfunkteilnehmers 7. Wenn die Kommunikation zwischen dem Mobilfunkteilnehmer 7 und dem Sender 8 auf einer oder mehreren anderen, insbesondere nicht-benachbarten Frequenzen erfolgt als die Kommunikation zwischen dem Mobilfunkteilnehmer 9 und dem Sender 10, ist dieses unproblematisch, insbesondere wenn ein ausreichender Abstand zwischen den Sendefrequenzen der Sender 8, 10 eingehalten wird.

Wenn jedoch ein Signal, welches mit der Feldstärke F_{10N} vom Sender 10 abgestrahlt wird und welches aufgrund der Ausbreitung mit der Feldstärke F_{10S} beim Empfänger des Mobilfunkteilnehmers 7 ankommt, die gleiche oder eine mit geringem Frequenzabstand benachbarte Frequenz hat wie ein Signal, welches der Sender 8 mit abstrahlt und welches beim Empfänger des Mobilfunkteilnehmers 7 mit der Feldstärke F_{8N} als Nutzsignal ankommt, kommt es zu Störungen. Die Intensität der Störung hängt dabei bei benachbarten Frequenzen vom Frequenzabstand und bei allen Frequenzen davon ab, welche Feldstärke F₁₀ₛ das störende Signal des anderen Senders 10 beim Empfäner 7 hat und welche Feldstärke F_{8N} das Nutzsignal des Senders 8 am Empfänger des Mobilfunkteilnehmers 7 hat. Was hier als Feldstärke bezeichnet wird, kann in der Realität auch als Leistung, Intensität oder sonstiger die Feldintensität implizierender Wert berechnet oder gemessen und weiterverarbeitet werden.

Wenn die Feldstärke F_{10S} des störenden Signals, welches von einem Sender 10 einer Nachbarzelle abgesandt wird, im Verhältnis zur Feldstärke F_{8N} des Nutzsignales von einem Sender 8 der gleichen Funkzelle 13 wie der Mobilfunkteilnehmer 7 zu groß wird, ergibt sich für den Mobilfunkteilner 7 kein befriedigender Empfang mehr. Dabei stört der Sender 10 einer Funkzelle, also Normalzelle 1 oder Mikrozelle 2, nicht notwendigerweise nur die jeweils ihm benachbarte Funkzelle, sondern kann auch räumlich entferntere Funkzellen stören.

Um derartige Störungen zu vermeiden, sollen den Sendern 8, 10, 11, 12 unterschiedliche Funkfrequenzen zugewiesen werden. Dabei werden jeweils zwei Sendern 8, 10 von Funkzellen, und damit jeweils auch den Mobilfunkteilnehmern innerhalb dieser Funkzellen, dann unterschiedliche Frequenzen zugewiesen, wenn die Störung von einer dieser beiden Zellen auf die andere größer als erlaubt ist. Dabei wird, wenn zwei Sendern 8, 10 von Funkzellen unterschiedliche Frequenzen zugewiesen werden müssen, jeweils ein Gleichfrequenzausschluß zwischen diesen beiden Funkzellen definiert und beispielsweise in einer Datenbank, beispielsweise in Form einer Matrix, abgespeichert.

Es muß nicht notwendigerweise für jede Funkzelle des gesamten Sendegebietes eines Mobilfunknetzes der störende Einfluß auf jede andere Funkzelle diese Mobilfunknetzes untersucht werden. Insbesondere bei sehr großem räumlichen Abstand zweier Funkzellen kann ohne exakte Berechnung angenommen werden, daß die Sender in den beiden Funkzellen jeweils nicht in nennenswerter Weise in der jeweils anderen Funkzelle empfangbar sind und damit stören. Beispielsweise kann die Auswirkung des Senders einer Funkzelle auf den Empfang in anderen Funkzellen nur in denjenigen Funkzellen betrachtet werden, welche sich innerhalb eines bestimmten Gebietes um die Funkzelle des Senders befinden. Dies kann insbesondere ein Gebiet um die Funkzelle mit einem bestimmten vorgebbaren Radius sein. Dabei kann für unterschiedliche Funkzellen ein verschiedener Radius definiert werden. Dieser Radius kann räumliche Gegebenheiten berücksichtigen. Beispielsweise können Gebäude in einer Stadt oder Gebirge auf dem Land etc. für die Wahl des Radius' berücksichtigt werden. So wird der Radius in der Stadt in der Regel kleiner als auf dem Land gewählt.

Innerhalb einer Funkzelle 13 (welche hier auch eine Normalzelle 1 ist) ist die Feldstärke F_{10S} eines Senders 10 einer anderen Funkzelle nicht überall gleich. Sie nimmt innerhalb der Funkzelle 13 mit zunehmendem Abstand von dem Sender 10 ab.

Auch hängen die punktuellen Feldstärken innerhalb einer Funkzelle von räumlichen Gegebenheiten, wie Gebäuden, Gebirgen etc. ab. Deshalb wird die Störung eines Signals, das von einem Sender 8 in einer jeweils betrachteten Funkzelle 13 gesendet wird, durch ein Signal, das von einem Sender 10 außerhalb dieser Funkzelle 13 gesendet wird, an mehreren Punkten oder Gebieten jeweils innerhalb einer Funkzelle 13 betrachtet. Dazu werden in einer Funkzelle jeweils Rasterzellen 15, 16, 17, 18, 19, 20, 21, 22, 23, 24, 25 bzw. 26, 27, 28, 29, 30, 31, 32, 33, 34 in Normalzellen bzw. Mikrozellen definiert. Dabei werden die Rasterzellen, beispielsweise 15 bis 25, in welche die Normalzellen 1, beispielsweise die Normalzelle 13, unterteilt werden, im folgenden als Großraster-Zellen bezeichnet. Die Rasterzellen, beispielsweise 26 bis 34, in welche die Mikrozellen 2 unterteilt werden, werden im folgenden als Kleinraster-Zellen bezeichnet. Rasterzellen, in welche ein Übergangsbereich 4 unterteilt wird, können insbesondere die Größe von Kleinraster-Zellen oder eine Größe zwischen der Größe von Kleinraster-Zellen und von Großraster-Zellen aufweisen und werden entsprechend als Kleinrasterzellen oder als Zwischenrasterzellen bezeichnet.

In einer Normalzelle mit Zwischenrasterzellen und Großrasterzellen werden Störungen in Zwischenrasterzellen und Großrasterzellen betrachtet wie oben ausgeführt und für diese Normalzelle für Gleichfrequenzausschlüsse berücksichtigt.

Innerhalb jeder Funkzelle wird nun für die Rasterzellen der Einfluß von Signalen von zu berücksichtigenden Sendern betrachtet. Dabei können z. B. alle Rasterzellen hinsichtlich des Einflusses der Signale von einem Sender aus einer anderen Funkzelle betrachtet werden. Jedoch ist es auch möglich, die Rasterzellen einer Funkzelle z. B. nacheinander nur solange hinsichtlich des Einflusses eines Signals von jeweils einem zu berücksichtigenden Sender 10 einer anderen Funkzelle zu betrachten, bis eine vorbestimmte Anzahl von Rasterzellen festgestellt wird, welche von diesem Sender 10 zumindest in einem vorgegebenen Ausmaß gestört werden.

Dabei kann der Absolutwert der Feldstärke jeweils eines Signales von einem außerhalb der Funkzelle liegenden Sender betrachtet werden.

Zweckmäßig ist es jedoch, für jeweils eine Rasterzelle einer Funkzelle 1, 2 das Verhältnis der Feldstärke F_{8N} des Signales des Senders 8, welcher sich in derjenigen Funkzelle 13 befindet, welche der die gerade zu betrachtende Rasterzelle 15 angehört, zur Feldstärke F_{10S} jeweils eines Signals eines Senders 10, welcher sich in einer anderen Funkzelle befindet, berechnet werden und eine Störung angenommen werden, wenn dieses Verhältnis unter einem für das gesamte Funknetz oder für Teile des Funknetzes vorgebbaren Grenzwert liegt. Für jede Rasterzelle wird jeweils das Feldstärkeverhältnis der Feldstärke des Nutzsignales des Senders 8 in der der Rasterzelle 15 zugehörigen Funkzelle zur Feldstärke in der Rasterzelle 15 des Störsignales eines außerhalb der zur Rasterzelle zugeordneten Funkzelle befindlichen Senders 10 für alle zu berücksichtigenden Sender 10, 11 bestimmt. Wie oben ausgeführt, kann dabei die Entscheidung, welche Sender berücksichtigt werden, beispielsweise von der Entfernung zur gerade betrachteten Rasterzelle oder Funkzelle abhängen.

Für mehrere oder alle Rasterzellen 15 bis 25 bzw. 26 bis 34 einer Funkzelle 1 bzw. 2 liegen nun Daten vor, welche angeben, ob diese Rasterzelle in einem unerwünschten Ausmaße von Signalen eines Senders 10, 11 außerhalb der Funkzelle, welcher die Rasterzelle angehört, gestört wird. Aufgrund dieser Daten wird nun jeweils für die Funkzelle 13, welcher diese Rasterzellen 15 bis 25 angehören, entschieden, ob der Sender 8 oder die Sender dieser Funkzelle 13 die gleichen Frequenzen verwenden dürfen bzw. darf wie der oder die Sender 10, 11 einer anderen Funkzelle. Diese Entscheidung erfolgt hier derart, daß wenn der Anteil der Rasterzellen 15 bis 25 bzw. 26 bis 34 einer Funkzelle 1 bzw. 2, in welchen eine Störung durch Signale von außerhalb der den betrachteten Rasterzellen zugeordneten Funkzelle liegenden Sendern 10, 11 inakzeptabel ist, entschieden wird, daß zwischen dem Sender oder den Sendern der betrachteten Funkzelle und dem jeweils in diese Funkzelle hineinstörenden Sender 10 einer anderen Funkzelle ein Gleichfrequenzausschluß definiert und abgespeichert wird. Wenn keine Störung in unerwünschtem Maße zwischen zwei Funkzellen auftritt, kann abgespeichert werden, daß diese beiden Funkzellen die gleiche Funkfrequenz bzw. gleiche Funkfrequenzen verwenden dürfen.

Entsprechendes kann für benachbarte Frequenzen in einer oder mehreren Funkzellen und/oder gleiche Frequenzen in der gleichen Funkzelle durchgeführt werden. Gleiche Frequenzen im Sinne der Erfindung können also entweder wirklich identische Frequenzen oder alternativ identische und benachbarte Frequenzen sein.

Die Abspeicherung kann beispielsweise in Form einer Matrix erfolgen. Beispielsweise kann zu jeder Funkzelle 1, 2 abgespeichert werden, zu welchen weiteren Funkzellen diese einen Gleichfrequenzausschluß hat.

Die Entscheidung für einen Gleichfrequenzausschluß zwischen jeweils zwei Funkzellen kann beispielsweise dann getroffen werden, wenn in mehr als einem Grenzwert-Anteil von Rasterzellen einer Funkzelle das Verhältnis der Feldstärke F_{8N} eines Senders 8 in der Funkzelle, welcher diese Rasterzellen zugehören, zur Feldstärke F_{10S} eines Senders 10, der einer anderen Funkzelle angehört, unter einem Grenzwert liegt.

In jeweils einer Rasterzelle 15 bis 25 bzw. 26 bis 34 kann die Entscheidung, daß für diese Rasterzelle eine Störung eines bestimmten Senders 10, 11 außerhalb der Funkzelle 13, welcher diese Rasterzelle 15 bis 25 angehört, angenommen werden, wenn das Verhältnis der Feldstärke des Senders 8 in der Funkzelle 13, welcher die Rasterzelle 15 bis 25 angehört, zur Feldstärke des Signals eines Senders 10, welcher einer anderen Funkzelle angehört, einen Schwellwert unterschreitet. Dieser Feldstärkeverhältnis-Entscheidungsschwellwert kann für das gesamte Funknetz gleich oder für Teilbereiche des Funknetzes unterschiedlich festgelegt werden.
Insbesondere kann beispielsweise im Stadtbereich ein höherer Schwellwert als auf dem Land vorgegeben werden.

Für eine Rasterzelle 15 wird für die Entscheidung, ob eine zulässige Störung durch Sender außerhalb der Funkzelle, welcher die Rasterzelle angehört, vorliegt, hier das Nutzsignal-/Störsignal-Verhältnis verwendet. Hierzu muß bestimmt werden, welche Feldstärke F_{8N} der Nutzsignal-Sender 8 innerhalb der jeweils betrachteten Rasterzelle 13 hat und welche Störsignal-Feldstärke F_{10S} ein Signal eines außerhalb der Funkzelle, welcher die betrachtete Rasterzelle angehört, liegenden Senders 10 hat. Dieses Nutzsignal-/Störsignal-Verhältnis kann z.B. während des Sendens eines Referenzsignales durch bewegliche Meßstationen für Rasterzellen des gesamten Funknetz-Bereichs oder für einen Teilbereich des Funknetzes erfolgen. Stattdessen oder zusätzlich kann insbesondere sehr kostengünstig auch eine Feldausbreitungsberechnung mittels eines Rechners für das gesamte Funknetzgebiet oder einen Teilbereich des Funknetzes erfolgen. Dabei wird die Feldausbreitung aufgrund eines Modelles des Funknetzes berechnet. Für unterschiedliche Teilbereiche des Funknetzes können unterschiedliche Modelle vorliegen. So kann für einen Teilbereich des Funknetzes auf dem Land ein ungenaueres und/oder gröberes Modell verwendet werden als in einem Stadtbereich des Funknetzes. Für Städte eines Funknetzes ist eine Berechnung der Funksignalausbreitung anhand eines 3D-Modells besonders geeignet. Mit einem derartigen 3D-Modell können Gebäude, Straßen, Brücken etc. gut berücksichtigt werden.

Im Beispiel ist um eine Stadt mit Mikrozellen 2 ein ländliches Gebiet mit Normalzellen 1 dargestellt. Überdies ist in Figur 1 um den Stadtbereich mit Mikrozellen 2 ein Übergangsbereich 4 schraffiert dargestellt. Innerhalb dieses Übergangsbereichs erfolgt die Berechnung von Störungen mit Rasterzellen, deren Durchmesser den Durchmesser der Mikrozellen aufweisen kann oder zwischen dem Rasterdurchmesser der Mikrozellen und dem der Rasterzellen der Normalzellen liegen kann. Dieser Übergangsereich optimiert die Ergebnisse der Berechnung.

Aufgrund der beispielsweise in einer Datei abgespeicherten Gleichfrequenzausschlüsse für jeweils zwei Funkzellen 1, 2 des Funknetzes kann eine Frequenzzuweisung zu den Funkzellen des Funknetzes, also zu den Sendern von Funkzellen eines Funknetzes erfolgen. Dabei wird die Vergabe von gleichen Frequenzen an Funkzellen 1, 2, welche zueinander einen Gleichfrequenzausschluß in der Datei etc. haben, unterlassen oder zumindest vermieden. Wenn der Gleichfrequenzausschluß nicht als binärer Wert sondern als mehrstufiger Wert definiert wird, kann auch noch die Art des Gleichfrequenzausschlusses jeweils berücksichtigt werden. Beispielsweise kann ein Gleichfrequenzausschluß mit einem bestimmten Wert dringender sein als ein Gleichfrequenzausschluß mit einem anderen Wert. So können beispielsweise zunächst dringendere Gleichfrequenzausschlüsse berücksichtigt werden.

Aufgrund der Gleichfrequenzausschlüsse werden nun allen Sendern von Basisstationen und entsprechend auch den mit diesen kommunizierenden Mobilfunkteilnehmern Funkfrequenzen zugewiesen.

Beim Betrieb eines Funknetzes, insbesondere Mobilfunknetzes, in welchem den Sendern Funkfrequenzen gemäß einem der Ansprüche oder obigen Ausführungen zugewiesen wurden, ergeben sich relativ wenige Störungen. Dabei wird insbesondere der Handover, also die Übergabe, eines sich über die Grenze zwischen zwei benachbarten Funkzellen fortbewegenden Mobilfunkteilnehmers 9 von dem Sender 8 einer Funkzelle an den Sender 10 einer anderen Funkzelle optimiert, da gerade im Übergangsbereich von Funkzellen Störungen besonders problematisch sind und diese erfindungsgemäß vermieden werden.

## Patentansprüche

1. Verfahren zur Zuweisung von Frequenzen, in einem Funksystem, welches aus jeweils durch einen Sender und die zugehörigen Funkfeldkenngrößen definierten Funkzeilen besteht,
- wobei die zur Zuweisung der Frequenzen, zu verwendenden räumlichen Verteilungen von Feldstärken in unterschiedlichen, an die Zellgröße des Funksystems angepassten Rasterungen berechnet werden,
**dadurch gekennzeichnet, dass**
zur Zuweisung der Frequenzen, die in unterschiedlichen Rasterungen berechneten räumlichen Verteilungen von Feldstärken verarbeitet werden in der Art, dass in einem Übergangsgebiet (4) das in dem Bereich der Normalzellen angeordnet ist und an den Bereich der Mikrozellen angrenzt, Feldstärken mit Rasterzellen berechnet werden, deren Durchmesser den Durchmesser von Mikrozellen aufweisen oder einen Durchmesser der zwischen dem Rasterdurchmesser der Mikrozellen und dem von Rasterzellen einer Normalzelle liegt,
dass die Frequenzen durch Beurteilung der in der Rasterung der Übergangsgebiets vorliegenden Verteilungen der Feldstärke derart zugewiesen werden,
dass die Beurteilung der Feldstärke zur Zuweisung der Frequenzen, durch
Auswertung der von jeweils zwei Sendern verursachten Nutzsignal-Störsignal-Verhältnisse erfolgt.

2. Verfahren nach Anspruch 1,
**dadurch gekennzeichnet,**
**daß** zwei, oder drei unterschiedliche Rasterungen gewählt werden.

3. Verfahren nach einem der vorhergehenden Ansprüche,
**dadurch gekennzeichnet,**
**daß** die Berechnung der Feldstärken durch unterschiedliche rechnerische und/oder meßtechnische Methoden in verschiedenen Rasterungen für bestimmte Teilgebiete des Versorgungsbereichs eines Mobilfunksystems erfolgt.

4. Verfahren nach Anspruch 1 oder 2,
**dadurch gekennzeichnet,**
**daß** die unterschiedlichen Rasterungen ganzzahlige Vielfache voneinander sind.

## Claims

1. Method for allocating frequencies in a radio system which is made up of radio cells, each defined by a transmitter and the hop parameters belonging to it, **-** wherein the spatial divisions that are to be used for the allocation of the frequencies are calculated from field intensities in different grid systems that are adapted to the cell size of the radio system,
**characterised in that**,
in order to allocate the frequencies, the spatial divisions of field intensities calculated in different grid systems are processed in such a way that, in a transition region (4) which is located in the area of the standard cells and which adjoins the area of the microcells, field intensities are calculated with grid cells, the diameters of which have the diameter of microcells or a diameter that falls between the grid diameter of the microcells and that of the grid cells of a standard cell,
**in that** the frequencies are allocated, by assessing the divisions of the field intensities present in the grid system of the transition region, in such a manner that the assessment of the field intensities for allocating the frequencies is carried out by assessing the ratio between wanted signal and interference signal originating in each case from two transmitters.

2. Method as in claim 1,
**characterised in that**
two or three different grid systems are selected.

3. Method as in one of the preceding claims,
**characterised in that**
the calculation of the field intensities is carried out by a variety of arithmetical and / or metrological methods in different grid systems for specific part-areas of the coverage area of a mobile telephony system.

4. Method as in claim 1 or 2,
**characterised in that**
the different grid systems are whole-number multiples of each other.

## Revendications

1. Procédé d'attribution de fréquences dans un système radio, lequel est composé de cellules radio définies chacune par un émetteur et les caractéristiques de champ hertzien correspondantes,
- les répartitions géographiques d'intensités de champ à utiliser pour l'attribution des fréquences étant calculées en quadrillages différents, adaptés à la taille des cellules du système radio,
**caractérisé en ce que**, pour l'attribution des fréquences, les répartitions géographiques d'intensités de champ calculées en différents quadrillages sont traitées de telle manière que, dans une zone de transition (4), laquelle est agencée dans la zone des cellules normales et jouxte la zone des microcellules, les intensités de champ sont calculées avec des cellules de quadrillage dont le diamètre est égal au diamètre des microcellules ou compris entre le diamètre de quadrillage des microcellules et celui des cellules de quadrillage d'une cellule normale, et **en ce que** les fréquences sont attribuées par estimation des répartitions de l'intensité de champ dans le quadrillage de la zone de transition, de sorte que l'estimation de l'intensité de champ pour l'attribution des fréquences a lieu par analyse des rapports signal utile - signal perturbateur produits par deux émetteurs.

2. Procédé selon la revendication 1,
**caractérisé en ce que** l'on choisit deux ou trois quadrillages différents.

3. Procédé selon l'une des revendications précédentes,
**caractérisé en ce que** le calcul des intensités de champ a lieu au moyen de diverses méthodes de calcul et/ou de mesure dans différents quadrillages pour des zones partielles déterminées de la zone de desserte d'un système de radiotéléphonie mobile.

4. Procédé selon la revendication 1 ou 2,
**caractérisé en ce que** les différents quadrillages sont des multiples entiers entre eux.
